# EUROPEAN PATENT SPECIFICATION

(11) **EP 2 708 170 B1**
(45) Date of publication and mention of the grant of the patent: **21.01.2015**
(21) Application number: 13184356.7
(22) Date of filing: 13.09.2013
(51) Int. Cl.: A47J 43/046

(54) **Base for a food mixer**
Basis für einen Nahrungsmittelmixer
Base pour un batteur d'aliments

(30) Priority: 14.09.2012 TW 101217752
(43) Date of publication of application: 19.03.2014
(73) Proprietor: Lee, Wen Ching, Taichung City (TW)
(72) Inventor: Lee, Wen Ching, Taichung City (TW)
(74) Representative: Lang, Christian

(56) References cited:
- CN-U- 201 831 727
- CN-Y- 201 200 347

## Description

### BACKGROUND OF THE INVENTION

The present invention relates to a food mixer and, more particularly, to a base for a food mixer.

A food mixer as known from document CN-Y-201200347 generally includes a container and a base. A cutter is mounted in a bottom of the container. A motor is mounted in the base and is mechanically connected to the cutter. A touch control panel is provided on a face of the base, allowing a user to control the speed or rotation mode of the motor by touching the touch control panel. However, the user has to repeatedly touch the touch control panel for increasing or reducing the speed of the motor. The speed of the motor is either too fast or too slow during operation, leading to inconvenience to use.

### BRIEF SUMMARY OF THE INVENTION

To overcome the disadvantages of the prior art, the present invention provides a base for a food mixer. The base includes a body in which a motor is mounted. The base further includes a control unit having a first touch control panel and a processor. The first touch control panel is mounted to a first side of the body. The first touch control panel includes a sliding section. The sliding section is strip-shaped. A finger of a user is adapted to slide from an end towards the other end of the sliding section, producing a sliding signal indicative of a sliding distance and a sliding direction of the finger of the user. The processor is in direct or indirect electrical connection with the motor and the first touch control pane and receives the sliding signal. The processor changes a speed of the motor according to the sliding signal due to sliding of the finger of the user along the sliding section.

Preferably, a second touch control panel is mounted in a top side of the body and is electrically connected to the control unit. The second touch control panel is adapted to be touched by the finger of the user to control on/off of the control unit.

Preferably, a groove is defined in a second side of the body opposite to the first side of the body. A power connector is mounted in the groove.

Preferably, the groove includes top and bottom walls and a lateral wall extending between the top and bottom walls. The lateral wall includes a through-hole in communication with an interior of the body. The power connector includes a power cord and a plug. The power cord extends through the through-hole and has an end connected to the plug. Two columns are mounted in the groove and spaced from each other. Each column has an upper end connected to the top wall and a lower end connected to the bottom wall.

Preferably, a bulge extends upward and outward from the first side of the body.

Preferably, the bulge includes a chamber having an opening in a top of the bulge, and the first touch control panel is received in the chamber via the opening.

The present invention will become clearer in light of the following detailed description of illustrative embodiments of this invention described in connection with the drawings.

### DESCRIPTION OF THE DRAWINGS

FIG. 1 shows a perspective view of a base for a food mixer according to the present invention.
FIG. 2 shows an exploded, perspective view of the base for a food mixer of FIG. 1.
FIG. 3 shows a rear view of the base for a food mixer of FIG. 1.
FIG. 4 shows a schematic block diagram illustrating electrical connection of some components of the base for a food mixer of FIG. 1.

### DETAILED DESCRIPTION OF THE INVENTION

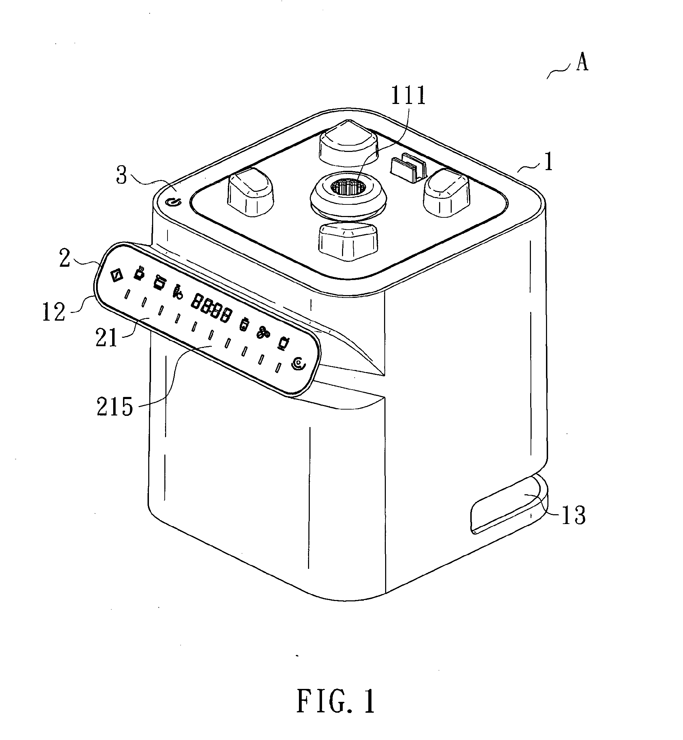

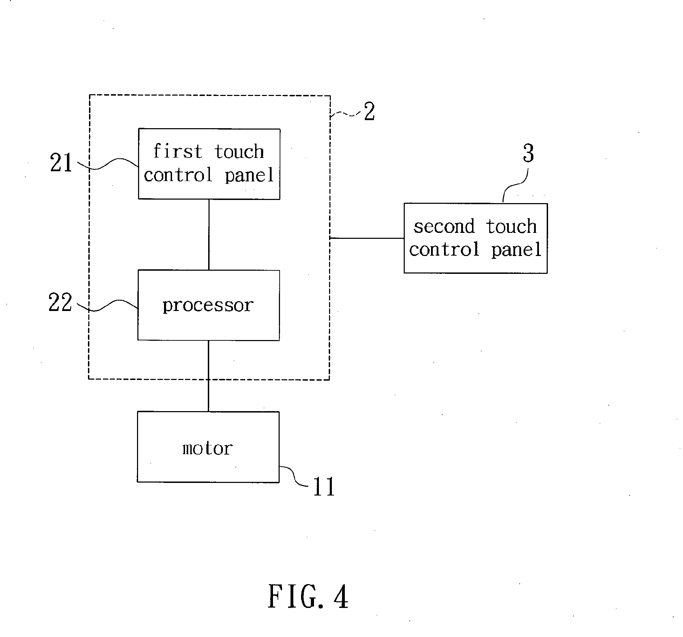

With reference to FIGS. 1 and 4, a base A for a food mixer according to the present invention includes a body 1 in which a motor 11 is mounted. A driving member 111 is connected to a shaft of the motor 11 and is exposed on a top side of the body 1. The driving member 11 is adapted to couple with and drive a cutter in a container of the food mixer, which can be appreciated by one skilled in the art.

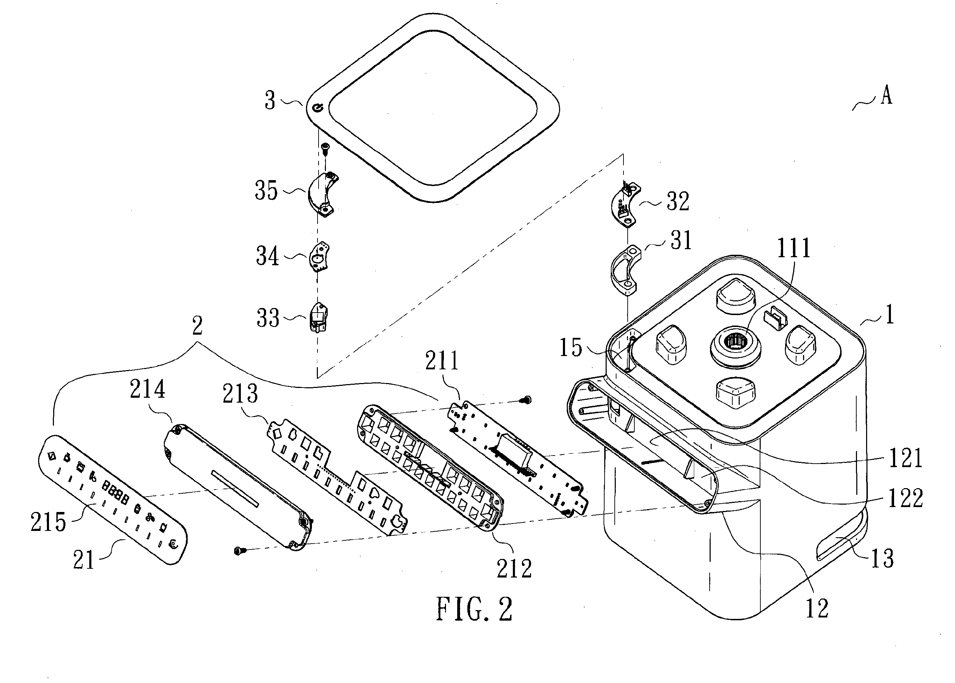

With reference to FIG. 2, a bulge 12 extends upward and outward from a first side of the body 1. Preferably, the bulge 12 includes a chamber 121 for receiving a control unit 2. The chamber 121 has an opening 122 in a top of the bulge 12. Since the bulge 12 extends upward and outward, the top of the bulge 12 faces the eyes of a user, allowing easy control by the user.

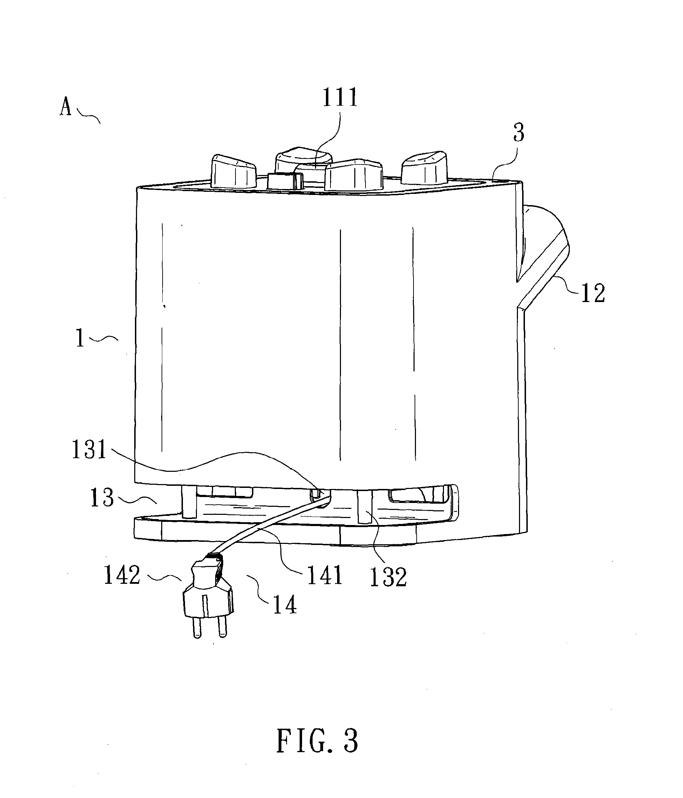

With reference to FIG. 3, the base A further includes a second side opposite to the first side. A groove 13 is defined in the second side, and a power connector 14 is mounted in the groove 13. The groove 13 includes top and bottom walls and a lateral wall extending between the top and bottom walls. The lateral wall includes a through-hole 131 in communication with an interior of the body 1. The power connector 14 includes a power cord 141 and a plug 142. The power cord 141 extends through the through-hole 131 and has an end connected to the plug 142. Two columns 132 are mounted in the groove 13, with each column 132 having an upper end connected to the top wall and a lower end connected to the bottom wall, with the two columns 132 spaced from each other. The power cord 141 and the plug 142 can be received in the groove 13, avoiding exposure of the power connector 14 and, thus, allowing easy storage of the base A. The power cord 141 can be wound around the columns 132, avoiding entangling of the power cord 141 received in the groove 13.

With reference to FIGS. 1 and 2, the control unit 2 includes a first touch control panel 21 and a processor 22. The first touch control panel 12 is mounted to the top of the bulge 12. The first touch control panel 21 includes a sliding section 215. The sliding section 215 has two ends and is preferably strip-shaped. A finger of the user can slide from one of the two ends towards the other end of the sliding section 215, producing a sliding signal indicative of a sliding distance and a sliding direction of the finger of the user.

The control unit 2 further includes an LED circuit board 211, a light-transmission frame 212, a touch control circuit board 213, and a shield 214 that are received in the chamber 121 in sequence. When the base A is in operation, the patterns on the first touch control panel 21 transmit light to allow easy operation by the user. The operation, connection, and functions of the components received in the chamber 121 can be appreciated by one having ordinary skill in the art.

With reference to FIGS. 1 and 4, the processor 22 is in direct or indirect electrical connection with the motor 11 and the first touch control panel 21. The processor 22 receives the sliding signal. The processor 22 includes a motor control program. When the finger of the user slides along the sliding section 215, the processor 22 changes the speed of the motor 22 according to the sliding signal.

As an example, when the finger of the user touches the sliding section 215 and slides rightwards, the speed of the motor 11 gradually increases under control by the processor 22. When the finger reaches the right end of the sliding section 215, the speed of the motor 11 is the fastest. When the finger of the user touches the sliding section 215 and slides leftwards, the speed of the motor 11 gradually decreases under control by the processor 22. The motor 11 stops when the finger reaches the left end of the sliding section 215. Thus, operation of the food mixer is easy to the user.

With reference to FIGS. 1 and 2, a second touch control panel 3 is mounted on the top side of the body 1. As can be seen from FIG. 2, the top side of the body 1 includes a recessed portion 15 in which a waterproof member 31, an LED circuit board 32, a light-transmission frame 33, a touch control circuit board 34, and a shield 35 are received in sequence. The operation, connection, and functions of the components received in the recessed portion 15 can be appreciated by one having ordinary skill in the art.

The second touch control panel 3 is electrically connected to the control unit 2. The user can touch the second touch control panel 3 to control on/off of the control unit 2.

Although specific embodiments have been illustrated and described, numerous modifications and variations are still possible without departing from the essence of the invention. The scope of the invention is limited by the accompanying claims.

## Claims

1. A base for a food mixer, with the base comprising:
a body (1), with a motor (11) mounted in the body (1); and
a control unit (2) including a first touch control panel (21) and a processor (22), with the first touch control panel (21) mounted to a first side of the body (1), with the first touch control panel (21) including a sliding section (215), with the sliding section (215) being strip-shaped, with a finger of a user adapted to slide from an end towards the other end of the sliding section (215), producing a sliding signal indicative of a sliding distance and a sliding direction of the finger of the user, with the processor (22) being in direct or indirect electrical connection with the motor (11) and the first touch control panel (21) and receiving the sliding signal, with the processor (22) changing a speed of the motor (11) according to the sliding signal due to sliding of the finger of the user along the sliding section (215).

2. The base for a food mixer as claimed in claim 1, further comprising: a second touch control panel (3) mounted on a top side of the body (1), with the second touch control panel (3) electrically connected to the control unit (2), with the second touch control panel (3) adapted to be touched by the finger of the user to control on/off of the control unit (2).

3. The base for a food mixer as claimed in claim 1, with the body (1) further including a second side opposite to the first side of the body (1), with a groove (13) defined in the second side, with a power connector (14) mounted in the groove (13).

4. The base for a food mixer as claimed in claim 3, with the groove (13) including top and bottom walls and a lateral wall extending between the top and bottom walls, with the lateral wall including a through-hole (131) in communication with an interior of the body (1), with the power connector (14) including a power cord (141) and a plug (142), with the power cord (141) extending through the through-hole (131) and having an end connected to the plug (142), with two columns (132) mounted in the groove (13) and spaced from each other, with each of the two columns (132) having an upper end connected to the top wall and a lower end connected to the bottom wall.

5. The base for a food mixer as claimed in claim 1, with a bulge (12) extending upward and outward from the first side of the body (1).

6. The base for a food mixer as claimed in claim 5, with the bulge (12) including a chamber (121) having an opening (122) in a top of the bulge (12), with the first touch control panel (121) received in the chamber (121) via the opening (122).

## Patentansprüche

1. Basis für einen Nahrungsmittelmixer mit
einem Körper (1) mit einem Motor (11), der in dem Körper (1) montiert ist, und
einer Kontrolleinheit (2), die ein erstes Berührungsbedienfeld (21) und einen Prozessor (22) umfasst, wobei das erste Berührungsbedienfeld (21) an einer ersten Seite des Körpers (1) angebracht ist, wobei das erste Berührungsbedienfeld (21) einen Gleitabschnitt (215) beinhaltet, wobei der Gleitabschnitt (215) streifenförmig ist, wobei ein Benutzer mit einem Finger von einem Ende zu dem anderen Ende des Gleitabschnitts (215) gleiten kann, wodurch ein Gleitsignal entsprechend eines Gleitabstands und einer Gleitrichtung des Fingers des Benutzers erzeugt wird, wobei der Prozessor (22) in direktem oder indirektem elektrischen Kontakt mit dem Motor (11) und dem ersten Berührungsbedienfeld (21) steht und das Gleitsignal empfängt, wobei der Prozessor (22) die Geschwindigkeit des Motors (11) gemäß dem Gleitsignal basierend auf der Gleitbewegung des Fingers des Benutzers entlang des Gleitabschnitts (215) ändert.

2. Basis für einen Nahrungsmittelmixer nach Anspruch 1, die außerdem ein zweites Berührungsbedienfeld (3) umfasst, das an einer Oberseite des Körpers (1) angeordnet ist, wobei das zweite Berührungsbedienfeld (3) elektrisch mit der Kontrolleinheit (2) verbunden ist, wobei das zweite Berührungsbedienfeld (3) von einem Benutzer mit dem Finger berührt werden kann, um die Kontrolleinheit (2) an- oder abzuschalten.

3. Basis für einen Nahrungsmittelmixer nach Anspruch 1, wobei der Körper (1) außerdem eine zweite Seite gegenüber der ersten Seite des Körpers (1) umfasst, wobei die zweite Seite eine Rille (13) aufweist, wobei ein Stromanschluss (14) in der Rille (13) angeordnet ist.

4. Basis für einen Nahrungsmittelmixer nach Anspruch 3, wobei die Rille (13) eine obere und untere Wand sowie eine laterale Wand umfasst, wobei sich die laterale Wand zwischen der oberen und der unteren Wand erstreckt, wobei die laterale Wand eine Durchgangsbohrung (131) beinhaltet, die mit dem Innenraum des Körpers (1) in Verbindung steht, wobei der Stromanschluss (14) ein Stromkabel (141) und einen Stecker (142) umfasst, wobei das Stromkabel (141) aus der Durchgangsbohrung (131) hervorsteht und an einem Ende mit dem Stecker (142) verbunden ist, wobei zwei Säulen (132) in der Rille (13) und voneinander getrennt angeordnet sind, wobei jede der beiden Säulen (132) ein oberes Ende umfasst, das mit der oberen Wand verbunden ist und ein unteres Ende, welches mit der unteren Wand verbunden ist.

5. Basis für einen Nahrungsmittelmixer nach Anspruch 1, wobei eine Auskragung (12) nach oben und außen aus der ersten Seite des Körpers (1) hervorsteht.

6. Basis für einen Nahrungsmittelmixer nach Anspruch 5, wobei die Auskragung (12) eine Kammer (121) mit einer Öffnung (122) an der Oberseite der Auskragung (12) beinhaltet, wobei das erste Berührungsbedienfeld (121) durch die Öffnung (122) in der Kammer (121) aufgenommen ist.

## Revendications

1. Base pour mixeur alimentaire avec la base qui comprend :
un corps (1) avec un moteur (11) monté dans le corps (1) et
une unité de commande (2) qui comprend un premier panneau de commande tactile (21) et un processeur (22), avec le premier panneau de commande tactile (21) monté sur un premier côté du corps (1), avec le premier panneau de commande tactile (21) qui comprend une section de glissement (215), avec la section de glissement (215) qui a la forme d'une bande, avec un doigt d'un utilisateur adapté pour glisser d'une extrémité vers l'autre extrémité de la section de glissement (215) en produisant un signal de glissement qui indique une distance de glissement et une direction de glissement du doigt de l'utilisateur, avec le processeur (22) qui est en relation électrique directe ou indirecte avec le moteur (11) et le premier panneau de commande tactile (21) et qui reçoit le signal de glissement, avec le processeur (22) qui change une vitesse du moteur (11) selon le signal de glissement dû au glissement du doigt de l'utilisateur le long de la section de glissement (215).

2. Base pour mixeur alimentaire selon la revendication 1 comprenant de plus : un second panneau de commande tactile (3) monté sur un côté de dessus du corps (1), avec le second panneau de commande tactile (3) relié électriquement à l'unité de commande (2), avec le second panneau de commande tactile (3) adapté pour être touché par le doigt de l'utilisateur pour la commande marche/arrêt de l'unité de commande (2).

3. Base pour mixeur alimentaire selon la revendication 1 avec le corps (1) comprenant de plus un second côté en face du premier côté du corps (1), avec une rainure (13) définie dans le second côté, avec un connecteur d'alimentation (14) monté dans la rainure (13).

4. Base pour mixeur alimentaire selon la revendication 3 avec la rainure (13) qui comprend des parois de dessus et de fond et une paroi latérale qui s'étend entre les parois de dessus et de fond contenant un trou traversant (131) en communication avec un intérieur du corps (1), avec le connecteur d'alimentation (14) qui comprend un câble d'alimentation (141) et une prise (142), avec le câble d'alimentation (141) qui s'étend à travers le trou traversant (131) et qui a une extrémité reliée à la prise (142), avec deux colonnes (132) montées dans la rainure (13) et espacées l'une de l'autre, avec chacune des deux colonnes (132) qui a une extrémité supérieure reliée à la paroi de dessus et une extrémité inférieure reliée à la paroi de fond.

5. Base pour mixeur alimentaire selon la revendication 1 avec un renflement (12) qui s'étend vers le haut et vers l'extérieur du premier côté du corps (1).

6. Base pour mixeur alimentaire selon la revendication 5 avec le renflement (12) qui comprend une chambre (121) qui a une ouverture (122) dans un dessus du renflement (12), avec le premier panneau de commande tactile (121) logé dans la chambre (121) par l'intermédiaire de l'ouverture (122).
